# EUROPEAN PATENT APPLICATION

(11) **EP 0 542 154 A2**
(43) Date of publication of application: **19.05.1993**
(21) Application number: 92119057.5
(22) Date of filing: 06.11.1992
(51) Int. Cl.: H04N 5/14

(54) **Method for the search of motion vectors for a video signal**

(30) Priority: 11.11.1991 FI 915308
(71) Applicant: OY NOKIA AB, SF-00130 Helsinki (FI)
(72) Inventor: Juhola, Janne, SF-33720 Tampere (FI); Lunden, Vesa, SF-33720 Tampere (FI)
(74) Representative: Schroeter, Helmut

(57) **Abstract**

The invention relates to a method for the search of a motion vector (MV) for a video signal in hybrid coding where the temporal redundancy of the image is removed by DPCM prediction and a resulting prediction error is converted by a transform operation into transform-domain coefficients and transmitted to a decoder in the form of coefficients. To avoid the problems caused in hybrid coding by motion vectors found by the commonly used block matching method, a first operation approximating the transform of the actual hybrid encoder is applied (35) to a difference image produced by an image block corresponding to a motion vector candidate to be tested in the search of the motion vectors, and the coefficients produced by said operation are used to approximate a number of bits required to code the transform coefficients, and a block minimizing said number of bits is selected from within a selected motion vector search area as the prediction block.

## Description

The invention relates to a method for the search of motion vectors for a video signal in hybrid coding, where the temporal redundancy of an image is removed by DPCM prediction and a generated prediction error is converted by a transform operation into transform-domain coefficients and transmitted to a decoder in the form of coefficients.

The compressibility of a video signal is based on the similarity between the consecutive images and the similarity between the adjacent pixels of individual images. Compression aims at removing all redundancy present in a video signal as well as information irrelevant to the human eye. Temporal redundancy is removed by transmitting only the differences between the consecutive images and only information relevant to the eye in the case of individual images.

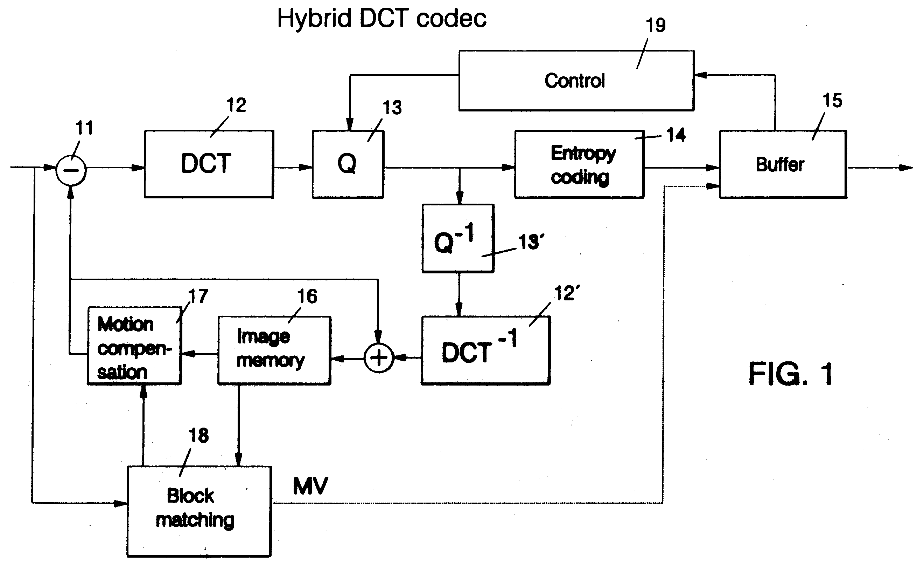

The hybrid Discrete Cosine Transform (DCT) codec, which will be described more closely below with reference to the attached figure 1, is today used widely in coding a video signal. The hybrid codec aims at removing temporal redundancy present in a video image by the temporal Differential Pulse Code Modulation (DPCM) coding in combination with the motion compensation technique. In the motion compensation, the search for motion vectors is typically performed by a so-called block matching method, in which each block of a current image is compared with the blocks of a reference block within a predetermined search area so as to find a reference block minimizing the applied error criterion (typically the Mean Absolute Error MAE or the Mean Square Error MSE). The difference between the positions of the current block and the selected reference block gives a motion vector for the particular block.

However, the motion vectors searched by the prior art block matching method cause problems in hybrid coding, which problems will be described in the following. First, the MEA and MSE error criteria most commonly used in the block matching do not minimize the bit number required to code a difference image transformed in the hybrid coding nor do they minimize the resulting final error in view of the human eye, but these criteria have been selected mainly for the reason that they do not require any complicated calculation operations. The values of the difference image obtained by using vectors searched by block matching are typically close to zero in most portions of the image area, but the difference may also obtain high values within narrow or small areas. In other words, certain portions of the difference image correlate to a very small extent with the rest of the difference image. In view of the Variable Length Coding (VLC), which is applied to the coefficients in the encoder, the result produced by the transforms is the better the more the individual pixels of the image to be transformed correlate with each other. Individual difference peaks produce a great number of transform coefficients and thus also a great number of bits.

In most cases it is also necessary to quantize the transform coefficients to achieve the required compression ratio. Then only the highest coefficients and coefficients most significant to the eye are transmitted. If the prediction error (difference image) produced by the DPCM prediction involves a forceful impulse-like peak, a high-value coefficient representing a high frequency is required to represent such a peak. This produces high-frequency components within the entire area of the block. These frequencies have to be eliminated from block portions where the above-mentioned impulse does not occur by transmitting several smaller coefficients. In a forceful quantization, it is not at all possible to transmit such coefficients; in an inverse transform, the impulse to be transmitted spreads over the entire area of the block, causing errors in the reconstructed image.

In many cases, it is thus advisable to use some other block than the block minimizing the MEA or MSE criterion as the prediction block, even though this other block would produce a higher power in the difference image. The use of this other block as the prediction block may, however, produce a prediction error (difference image) which can be presented by a smaller number of transform coefficients as compared with the prediction error produced by the normally selected block minimizing the error criterion.

The object of the present invention is to provide a new method for the search of motion vectors required in coding, which method avoids the above-described disadvantages. This is achieved by means of a method according to the invention, which is characterized in that a first operation approximating the transform of the actual hybrid encoder is applied to a difference image produced by an image block corresponding to a motion vector candidate to be tested in the search of the motion vectors, and the coefficients produced by said operation are used to approximate a number of bits required to code the transform coefficients, and a block minimizing said number of bits is selected from within a selected motion vector search area as the prediction block.

The basic idea of the invention is that a transform approximating the transform performed by the actual hybrid encoder but simple enough in implementation is applied to a difference image produced by an image block corresponding to a motion vector candidate to be tested in the search for the motion vectors. As the transform performed in the hybrid encoder (and the quantization of the transform coefficients) cannot, in practice, be performed over the entire motion vector search area due to the heaviness of the operation, the idea of the invention is to compensate for the heaviness caused by the size of the search area by using an approximation of the actual transform, the practical implementation of the approximation being considerably simpler than that of the actual transform.

In the following the invention and its preferred embodiments will be described in greater detail with reference to the attached drawings, in which
Figure 1 is a block diagram illustrating the principal features of a DCT encoder known *per se*;
Figure 2 illustrates the search for motion vectors by a block matching method known *per se*; and
Figure 3 illustrates the search for motion vectors by a method according to the present invention.

Figure 1 is a block diagram illustrating the principal features of a DCT encoder known *per se*. This technique is applied in many prior art video codecs, such as H.261 (Reference [1], the references are listed at the end of the specification), MPEG1 (Reference [2]) and DigiCipher™ (Reference [3]). All these methods have the same basic principle even though the more detailed realization of the different blocks may vary. It is to be mentioned that even though only the hybrid DCT coding has been referred to herein and will be referred to hereinbelow, the method according to the invention may also be used in connection with motion-compensated compression methods employing a transform other than the DCT transform, e.g. in connection with the so-called sub-band coding. (Hybrid coding refers to a way of coding in which the temporal predictive (differential) coding is connected to a spatial transform, such as the DCT.)

The difference image produced in a subtraction means 11 of the hybrid DCT codec (or the original image in the synchronization images to be coded without earlier information) is applied to a DCT transformation unit 12. The DCT aims at concentrating the energy of the image under transformation into a few transform-domain coefficients, thus reducing the entropy. By weighting the coefficients produced by the DCT, information irrelevant to the eye is removed (such as high diagonal frequencies to which the eye is insensitive), and the number of produced bits is controlled by a quantization performed in a quantization unit 13 connected after the transformation unit. Inverse quantization and transformation blocks 13' and 12' are needed for the feedback of the DPCM coding.

The bits formed by the DCT coefficients, the motion vectors, etc., are coded by entropy coding in a coding unit 14. Entropy coding aims at minimizing the number of bits to be transmitted in relation to the entropy of the signal. The basic idea is that the code words assigned to frequently transmitted symbols are shorter than those assigned to the less frequent symbols. The large number of zeros in the quantized coefficients is utilized when coding coefficients obtained by the DCT. For example, the MPEG standard model (Reference [2]) employs run-length coding which transmits information indicating how many zeros precede a non-zero coefficient and what the non-zero coefficient is. Variable-length code words are assigned to these run-length/final level pairs, the length of the code words depending on their probability of occurrence. To increase the number of consecutive zeros, the coefficients are derived from a coefficient matrix produced by the DCT transform in a so-called zigzag sequence (Reference [2]).

As the number of formed bits varies with the image content, a buffer 15 has to be provided in the encoder in order to compensate for variation in the bit stream to be transmitted over the channel. To compensate for such variation in compliance with the requirements of the channel, the quantization is controlled on the basis of the degree of fullness of the buffer by means of a control unit 19. The overflow of the buffer 15 can be prevented by increasing the quantization step.

The image to be transmitted is reconstructed in an image memory 16, and the above-described motion compensation and the associated block matching are carried out in blocks 17 and 18.

The hybrid DCT codec of Figure 1 and its operation are described more closely e.g. in References [1], [3] and [4].

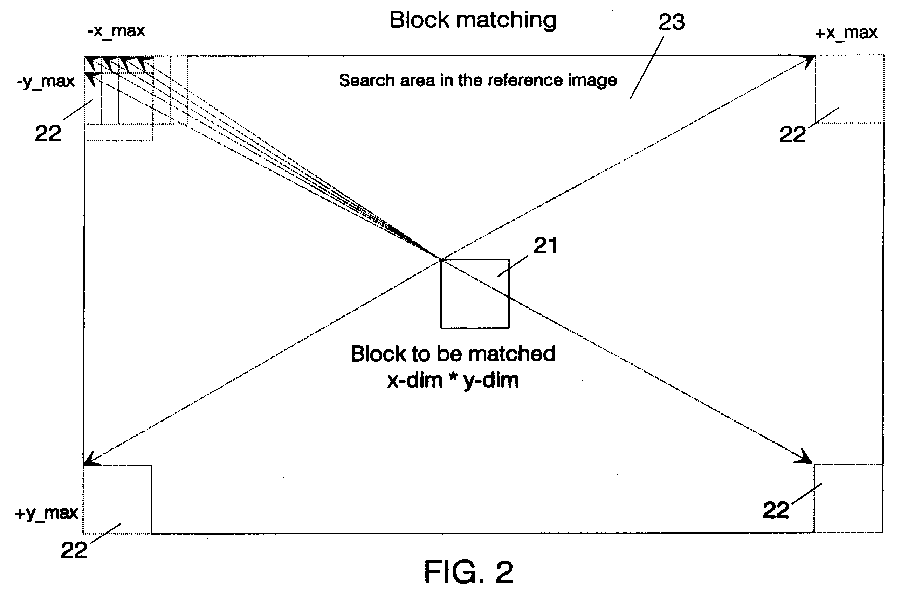

To find the motion vectors MV, the above-described common block matching method is applied in the following way (Figure 2). A block 21 to be compensated for is compared with a block 22 of equal size within a search area 23 in a reference image. The size of the search area as complete pixels is determined in accordance with parameters x_max and y_max. A matching error is calculated between the blocks 21 and 22 in accordance with the applied error criterion. The vector is then changed by one pixel and an error value is calculated for a block corresponding to the vector. The error value is compared with the previous value and the vector having the smaller error value is selected as the present motion vector candidate. The search is continued over the entire search area, and the final motion vector will thus be the vector having the smallest error value within the search area.

As the comparison between the blocks is a heavy operation, methods have been developed in an attempt to test only part of the motion vector candidates. This can be done e.g. by testing a few vectors of different directions and by carrying out the search more thoroughly around the vector giving the best result.

The motion vector may also be searched with an accuracy greater than one whole pixel. This is done by making the sampling raster of the search area 23 of the reference image more dense by interpolating new pixels between the original pixels. In this way, the search for the motion vector can be carried out with a desired accuracy.

It is also possible to carry out the search for the motion vectors by first applying a transform (such as the Fourier transform) to the image and then searching for correlation peaks in the transform domain. Typically, such methods produce a number of motion vector candidates, from which the best is selected by using the block matching with a desired selection criterion.

The method according to the present invention aims at performing the search for the motion vectors in such a way that when the vectors are applied in hybrid coding to produce a difference image, the number of bits required to code the transformed difference image is minimized.

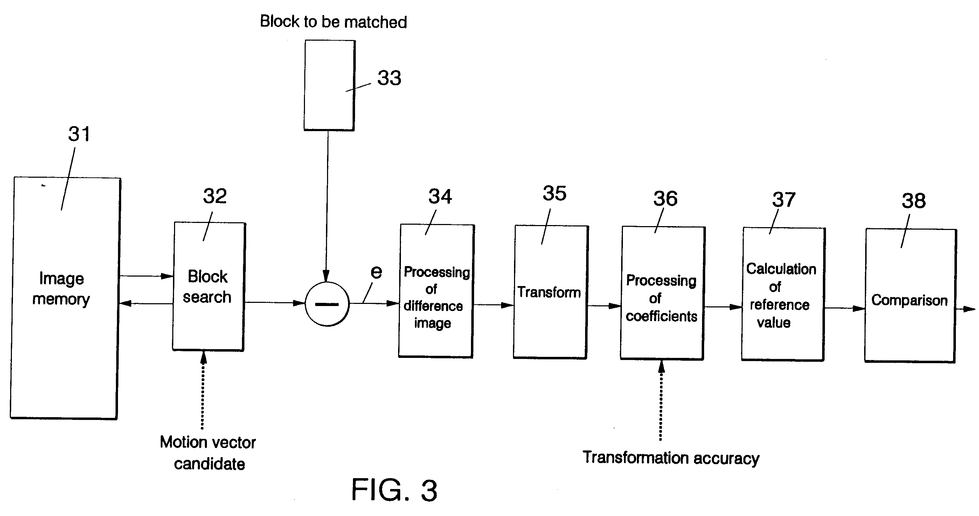

Figure 3 illustrates the method according to the invention. A reference block corresponding to a vector to be tested and found within a predetermined search area of a reference image 31 by a search unit 32 is subtracted from an image block 33 to be matched. The generated difference image (indicated with the reference e) is further processed in an optional processing unit 34, where the bit number of the difference image can be dropped below the normal level so as to optimize the remaining calculation operations. It is also possible to reduce the interfering effect of noise within uniform image areas e.g. by thresholding the difference image, so that only difference values with an absolute value above a predetermined value are maintained, while the remaining difference values are given the value zero.

A transform approximating the transform applied in the actual encoder but having a simpler implementation is applied to the processed difference image in a transformation unit 35 following the processing unit. In practice, one suitable approximating transform is e.g. the Generalized Chen Transform (GCT) known *per se*, see Reference [5]. For example, a DCT transform of 8*8 pixels requires 256 multiplication operations, while the approximating GCT transform can be performed without any multiplication. The selection of the approximating transform is a compromise between approximation errors and the heaviness of the practical implementation.

The actual transform may also be approximated by calculating only part of the coefficients produced by the normal transform and performing the other operations on these coefficients only. Reduction in the number of coefficients reduces the required calculation considerably.

The generated transform coefficients are weighted and quantized by using an appropriate matrix 36 connected after the transformation unit 35. In the matrix, the transform coefficients are first weighted by a so-called weighting matrix. This is done in order to take into account the different sensitivity of the human eye to different frequencies (to frequencies represented by the different coefficients). The human eye is more sensitive to vertical and horizontal frequencies than to diagonal frequencies. Therefore the transform coefficients corresponding to diagonal frequencies are less important for the final quality of the coded image than the other coefficients. Coefficients representing high diagonal frequencies have a threshold value below which the effect of the coefficient on the image is no longer perceived by the eye. The weighting matrix aims at removing coefficients insignificant to the eye before transmission. Examples of such weighting of coefficients can be found e.g. in Reference [2]. Most of the weighting matrices presently in use require a multiplication to be performed. However, the matrices can be approximated by taking advantage of simple operations, such as multiplication by the powers of 2 and summing operations.

The significance of the transform coefficients important for the quality of the image can be emphasized at the expense of the less important coefficients by quantizing the important coefficients less efficiently. The number of bits produced in the actual encoder is controlled by altering the quantization of the transform coefficients so as to avoid the exceeding of the transmission capacity of the channel which is used. By increasing the quantization step, more zeros are produced and the rest of the coefficients are smaller so that the entropy coding produces a smaller number of bits to be transmitted. The same quantization operation can be performed in the search of motion vectors. Examples of the implementation of the quantization can be found e.g. in References [1] and [2].

The matrix 36 thus models the weighting and the quantization of coefficients used in the actual encoding. This approximation can be realized e.g. by using a combination of the quantization and weighting of the coefficients used in the encoder of the DigiCipher™ system, see Reference [3].

The processed transform coefficients are then utilized to calculate a reference value for the particular block in a calculation unit 37, which is connected after the matrix 36. Alternative ways of calculating the reference value include the determination of the number of non-zero coefficients, the sum of the coefficients, the square sum, the sum of the lengths of runs of zeros in the transform coefficients read in a desired order, the approximation of the number of bits produced by the coefficients in the VLC coding, or a combination of some of the above alternatives.

The reference value so obtained is compared with the current minimum of the reference value in a comparison unit 38, and if the current reference value is smaller, the difference between the positions of the block to be matched and the present reference block is selected as the present motion vector. The above-mentioned operations are performed on all blocks within the search area, and the vector giving the smallest reference value is selected as the final motion vector of the block to be matched.

The method may also be realized only within a part of the search area 23, in the neighbourhood of a position indicated by a vector generated by some other motion vector searching method, or by post-processing an existing vector field. In the latter case, a few motion vector candidates are first selected from within the search area by a searching method known *per se*, and the vectors then define the selected motion vector search area. The method of the invention is applied only to the motion vector candidates so obtained.

Even though the invention has been described above with reference to the example of the attached drawings, it is obvious that the invention is not restricted to it, but it can be modified in various ways within the inventive idea disclosed above and in the accompanying claims. For example, the processing unit 34 or/and the matrix 36 are not necessarily needed; they form part of the described preferred embodiment of the invention. The search of the motion vectors may also be carried out with an accuracy greater than that of one whole pixel.

### References:

[1] *Video Codec for Audio Visual Services at px64 kbit/s*, CCITT Recommendation H.261, 1990.
[2] *MPEG Video Simulation Model Three (SM3)*, ISO/MPEG 90/041.
[3] W. Paik: *DigiCipher - All Digital Channel* *Compatible HDTV Broadcast System*, IEEE Trans. on Broadcasting, Vol. 36, No. 4, Dec. 1990.
[4] Mario Guglielmo, Giulio Modena, Roberto Montagna: *Speech and Image Coding for Digital Communications*, Centro Studi e Laboratori Telecomunicazioni S.p.A., Vol. II - N.1 January - February 1991, Turin, Italy, Chapter 3.4.2. *Redundancy Reduction Technique: the Hybrid coding scheme*.
[5] J. Allen, S. Blonstein, *The Multiply-Free Chen Transform - A Rational Approach to JPEG*, Picture Coding Symposium Sept. 1991, Tokyo, Japan.

## Claims

1. A method for the search of a motion vector (MV) for a video signal in hybrid coding where the temporal redundancy of an image is removed by DPCM prediction and a resulting prediction error is converted by a transform operation into transform-domain coefficients and transmitted to a decoder in the form of coefficients, **characterized** in that a first operation approximating the transform of the actual hybrid encoder is applied (35) to a difference image produced by an image block corresponding to a motion vector candidate to be tested in the search of the motion vectors, and the coefficients produced by said operation are used to approximate a number of bits required to code the transform coefficients, and a block minimizing said number of bits is selected from within a selected motion vector search area as the prediction block.

2. A method according to claim 1, **characterized** in that a second operation approximating the quantization of the transform coefficients of the actual hybrid encoder is further applied (36) to said coefficients, the approximation being carried out by means of the coefficients obtained from the second operation.

3. A method according to claim 1 or 2, **characterized** in that the difference image is thresholded (34) prior to said first operation.

4. A method according to claim 1 or 2, **characterized** in that the number of bits required to represent the difference image is reduced (34) prior to said first operation.

5. A method according to any of the preceding claims, **characterized** in that the generated number of bits is approximated by counting the non-zero transform coefficients.

6. A method according to any of the preceding claims, **characterized** in that the generated number of bits is approximated by calculating (37) the sum of the coefficients.

7. A method according to any of the preceding claims, **characterized** in that the generated number of bits is approximated by calculating (37) the square sum of the coefficients.

8. A method according to any of the preceding claims, **characterized** in that the generated number of bits is approximated by reading (37) the coefficients in a desired order and calculating (37) the sum of the lengths of the runs of zeros.

9. A method according to any of the preceding claims, **characterized** in that the generated number of bits is determined by coding (37) the coefficients in the same way as in the hybrid encoder and determining (37) the generated number of bits.

10. A method according to any of the preceding claims, **characterized** in that it is carried out only in a part of a search area (23), in the neighbourhood of a position indicated by a vector obtained by some other motion vector searching method.

11. A method according to claim 1, where a few motion vector candidates are first selected from within a search area (23) by a searching method known *per se*, **characterized** in that it is applied only to the motion vector candidates so obtained.
